## Europäisches Patentamt
## European Patent Office
## Office européen des brevets

(19)

(11) Veröffentlichungsnummer: **0 046 732**
**B1**

(12) ## EUROPÄISCHE PATENTSCHRIFT

(45) Veröffentlichungstag der Patentschrift:
**01.02.84**

(51) Int. Cl.³: **G 03 B 27/54**

(21) Anmeldenummer: **81810339.2**

(22) Anmeldetag: **19.08.81**

(54) Beleuchtungsvorrichtung für ein fotografisches Kopiergerät.

(30) Priorität 25.08.80 CH 6387/80

(43) Veröffentlichungstag der Anmeldung:
**03.03.82 Patentblatt 82/9**

(45) Bekanntmachung des Hinweises auf die Patenterteilung:
**01.02.84 Patentblatt 84/5**

(84) Benannte Vertragsstaaten:
**CH DE FR GB IT LI**

(56) Entgegenhaltungen:
**DE - A - 2 528 673**
**US - A - 2 985 062**
**US - A - 3 897 147**
**US - A - 4 125 315**

(73) Patentinhaber: **GRETAG Aktiengesellschaft,
Althardstrasse 70, CH-8105 Regensdorf (CH)**

(72) Erfinder: **Mast, Fred, Dr., Fürstenlandstrasse 15,
CH-9500 Wil (CH)**

(74) Vertreter: **Pirner, Wilhelm et al, Patentabteilung der
CIBA-GEIGY AG Postfach, CH-4002 Basel (CH)**

BUNDESDRUCKEREI BERLIN

Beleuchtungsvorrichtung für ein fotografisches Kopiergerät

Die Erfindung betrifft eine Beleuchtungsvorrichtung gemäß Oberbegriff des Patentanspruchs 1, wie sie beispielsweise im Farbprinter 3140 der Fa. Gretag AG, Regensdorf, Schweiz verwendet wird.

Mit zunehmender Leistungssteigerung der automatischen Kopiergeräte steigen auch die Anforderungen an das Kopierlicht und damit an die dieses erzeugende Beleuchtungsvorrichtung. Insbesondere werden zunehmend höhere Lichtintensitäten gefordert, um eine kürzere Belichtungszeit und damit eine höhere Kopiergeschwindigkeit zu erreichen.

Mit zunehmender Lichtintensität steigen auch die Schwierigkeiten bei der Homogenisierung der Farbverteilung über die beleuchtete Fläche. Insbesondere ist es sehr schwierig, eine gleichmäßige Farbverteilung unabhängig von der Stellung der Filter zu erreichen. Außerdem ist es notwendig, verstärkt auf den Lichtwirkungsgrad zu achten, d. h., Lichtverluste möglichst zu vermeiden. Durch die vorliegende Erfindung soll nun eine Beleuchtungsvorrichtung der genannten Art geschaffen werden, die auch bei höchsten Lichtintensitäten einwandfrei homogenes Licht erzeugt und geringste Lichtverluste aufweist.

Die diesen Anforderungen gerecht werdende Beleuchtungsvorrichtung ist erfindungsgemäß durch die im Patentanspruch 1 angeführten Merkmale gekennzeichnet.

Im folgenden wird die Erfindung anhand der Zeichnung näher erläutert. Es zeigt

Fig. 1 ein Prinzipschema einer erfindungsgemäßen Beleuchtungsvorrichtung,

Fig. 2 eine Ansicht des Lichteintritts des Mischkörpers gemäß den Pfeilen II-II in Fig. 1,

Fig. 3 einen Schnitt durch den Mischkörper gemäß der Linie III-III in Fig. 1,

Fig. 4 eine vergrößerte perspektivische Darstellung der Lichteintrittspartie des Mischkörpers von Fig. 1,

Fig. 5 eine Ansicht des Filteraggregats nach der Linie V-V in Fig. 1 und

Fig. 6 eine Variante des Mischkörpers.

Die in ein fotografisches Kopiergerät eingebaute Beleuchtungsvorrichtung umfaßt darstellungsgemäß eine als Ganzes mit 1 bezeichnete Lichtquelle, ein Filteraggregat 2, eine aus zwei Linsen 31 und 32 bestehende Optik 3, einen Umlenkspiegel 4 und einen Mischkörper 5.

Das von der Lichtquelle 1 ausgehende Licht wird im Filteraggregat 2 bezüglich Intensität und farblicher Zusammensetzung moduliert und wird vom Spiegel 4 in den Mischkörper 5 umgelenkt, aus welchem es homogen gemischt austritt und die nur andeutungsweise dargestellte Unterlage 6 für die Kopiervorlage, in der Regel ein Negativbild, beaufschlagt.

In diesem generellen Aufbau entspricht die dargestellte Beleuchtungsvorrichtung dem bekannten Stand der Technik, wie er z. B. etwa durch den automatischen Printer 3140 der Fa.

Gretag AG, Regensdorf, Schweiz, gegeben ist. Die erfindungsgemäßen Unterschiede gegenüber bekannten Beleuchtungsanordnungen liegen in der speziellen Ausbildung des Mischkörpers 5 sowie in der gegenseitigen räumlichen bzw. optischen Zuordnung zum Filteraggregat 2.

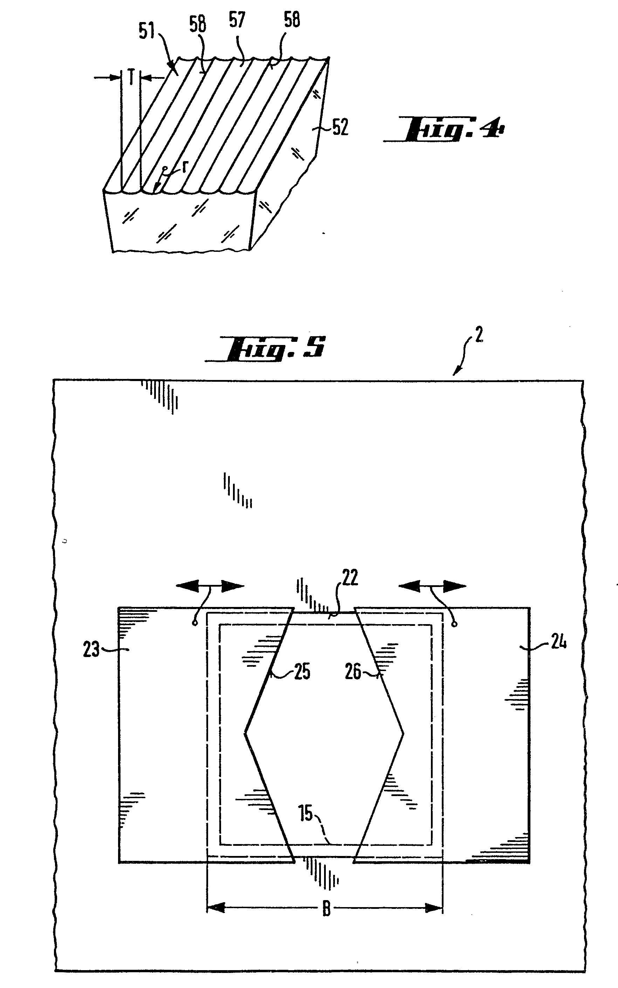

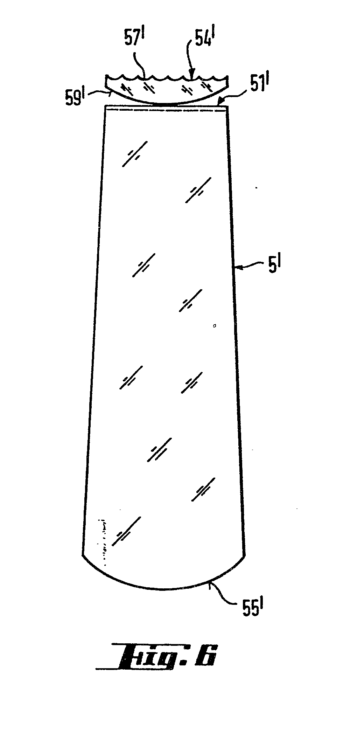

Die Lichtquelle 1 besteht aus vier zueinander symmetrisch angeordneten Systemen, deren jedes eine Niedervolt-Halogenlampe 11, einen Reflektor 12 und zwei Kondensorlinsen 13 und 14 umfaßt. Je zwei der Systeme liegen vertikal übereinander bzw. horizontal nebeneinander. Die Reflektoren 12 und Kondensorlinsen 13 und 14 sind so angeordnet und bemessen, daß die Wendeln der Lampen 11 sowie deren Spiegelbilder auf eine gemeinsame Fläche etwa in der Mittelebene M des Filteraggregats 2 abgebildet werden. Die Größe des in Fig. 5 strichliert angedeuteten Wendelbilds 15 entspricht im wesentlichen etwa den beiden Durchtrittsfenstern 21 und 22 des Filteraggregats 2.

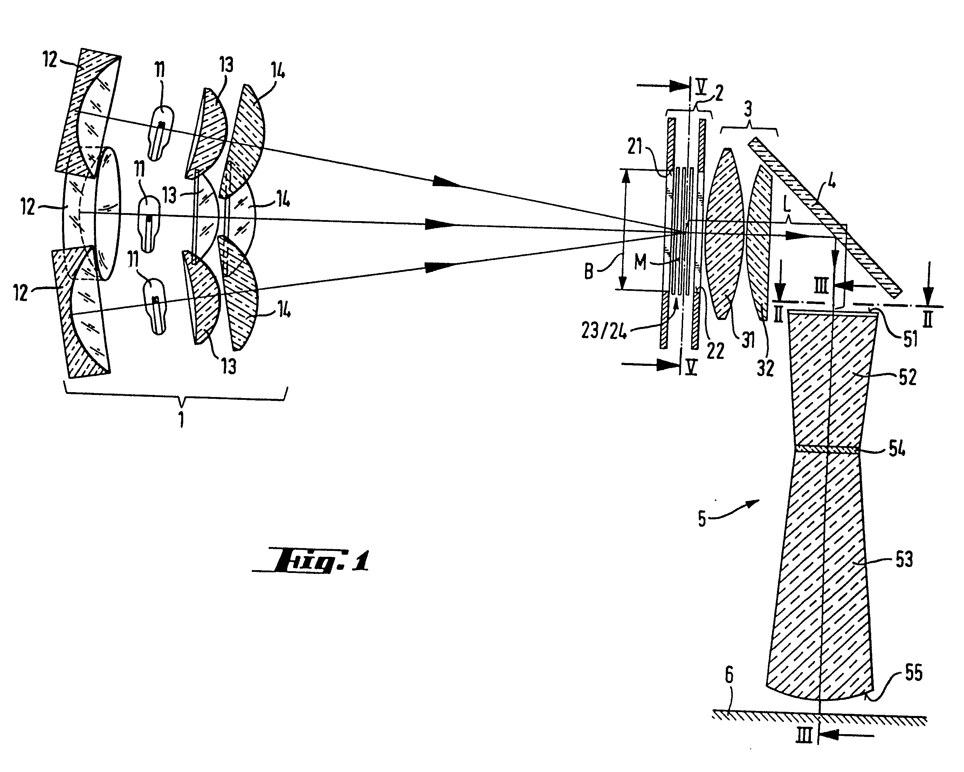

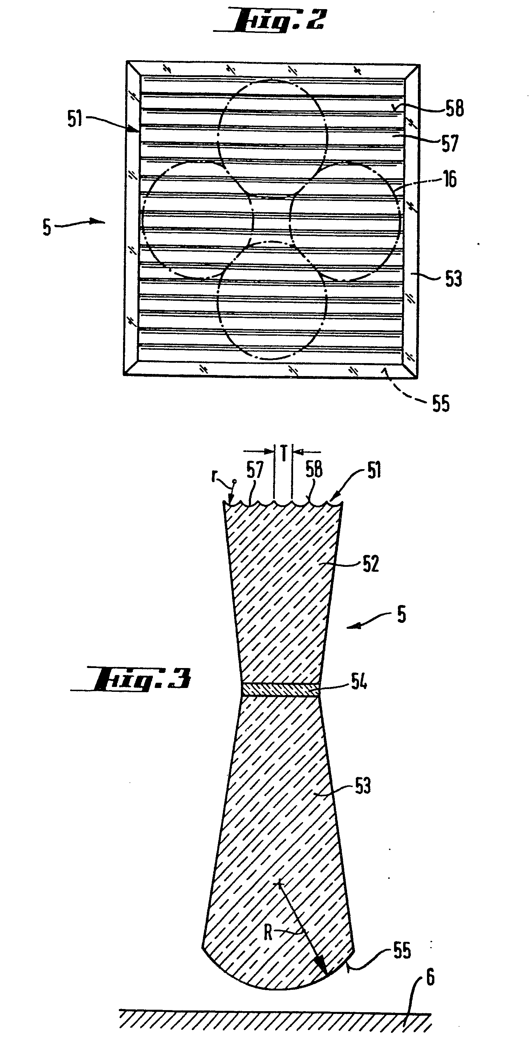

Die beiden Linsen 31 und 32 der Optik 3 bilden die Kondensorlinsen der vier Systeme der Lichtquelle 1 über den Umlenkspiegel 4 auf die Eintrittsfläche 51 des Mischkörpers 5 ab. Auf dieser Fläche 51 entsteht dann das in Fig. 2 gezeigte, strichpunktiert angedeutete Kondensorbild 16.

Das Filteraggregat 2 umfaßt für jede der drei subtraktiven Grundfarben im wesentlichen ein Paar von Interferenz-Filtern 23, 24 (Fig. 5), welche symmetrisch bezüglich der optischen Achse des Beleuchtungssystems verstellbar sind. Jedes Filterpaar ist mittels eines eigenen Schrittmotors über eine Kurvenscheibe derart antreibbar, daß die relative (Farb-)Intensitätsänderung des filtrierten Lichts in gleichbleibenden Stufen erfolgt. Weitere Details über den Aufbau des Filteraggregats sind z. B. in der US-A-4 080 050 beschrieben.

Die einander zugewandten Begrenzungskanten der beiden Filter 23 und 24 jedes Paares sind nicht gerade, sondern konkav ausgebildet. In Fig. 5 z. B. sind die beiden Vorderkanten 25 und 26 jeweils keilförmig ausgeschnitten. Die konkaven Vorderkanten bewirken ein besseres Regelverhalten bei größeren Abschwächungswerten, also wenn sich die beiden Filter eines Paares in ihren der optischen Achse näheren Stellungen befinden.

Der Mischkörper 5 besteht aus zwei pyramidenstumpfförmigen Teilen 52 und 53 aus Glas und einer zwischen den beiden Teilen angeordneten Streuscheibe 54. Die Lichtaustrittsfläche 55 des unteren Mischkörperteils 53 ist sphärisch. Die Lichteintrittsfläche 51 des oberen Mischkörperteils 52 ist gerippt ausgebildet, wobei die Längsrichtungen bzw. Achsen der parallelen Rippen senkrecht zur auf die Lichteintrittsfläche 51 projizierten Bewegungsrichtung der Filterpaare im Filteraggregat 2 verlaufen. In Fig. 1 bewegen sich die Filterpaare senkrecht zur Zeichenebene, folglich verlaufen also die Rippungen parallel zur Zeichenebene.

Die genauere Ausbildung der gerippten Lichteintrittsfläche 51 geht aus den Fig. 3 und 4 hervor. Die einzelnen Rippen bzw. Furchen bilden eine Anzahl von unmittelbar aneinander gereihten Zylinderlinsen 57, die durch möglichst scharfe geradlinige Kanten 58 voneinander getrennt sind. Der Krümmungsradius dieser Zylinderlinsen 57 ist mit r bezeichnet und die Breite der Linsen bzw. die Rasterteilung mit T. Die Zylinderlinsen sind direkt in das Glas des oberen Mischkörperteils 52 eingepreßt.

Die Aufgabe der eingepreßten Zylinderlinsen 57 ist eine möglichst gute Homogenität des Lichts unabhängig von der Stellung der Filterpaare im Filteraggregat 2 zu erreichen. Dies macht eine besondere Ausbildung bzw. Dimensionierung der Zylinderlinsen erforderlich. Optimalen Effekt erhält man, wenn die Kanten 58 zwischen den einzelnen Linsen möglichst schmal bzw. scharf ausgebildet sind und wenn die Krümmungsradien r der Zylinderlinsen im wesentlichen der Beziehung

$$r = (n-1) \cdot \frac{L \cdot T}{B}$$

genügen. Darin sind n der Brechungsindex des für den Mischkörper 5 verwendeten Glases (z. B. 1,52), T die Rasterteilung bzw. Breite der Zylinderlinsen, B die Seitenlänge der Durchtrittsfenster 21 und 22 des Filteraggregats 2 und L der Abstand der Lichteintrittsfläche 51 des Mischkörpers 5 von der Mittelebene M des Filteraggregats 2. Mit dieser Bemessung der Zylinderlinsen bilden diese das Lichtdurchtrittsfenster des Filteraggregats so in eine gemeinsame Ebene ab, daß die einzelnen Abbilder nahtlos aneinander grenzen, ohne sich zu überlappen. Der Lichtmischkörper sieht dann gewissermaßen eine homogene Lichtfläche.

Beim dargestellten Ausführungsbeispiel betragen B und L 60 bzw. ~ 100 mm. Die Rasterteilung T ist freier Parameter. T wird vorzugsweise möglichst klein gewählt, was einer feinen Rippung der Lichteintrittsfläche 51 entspricht. Eine untere Grenze ist jedoch durch den für die Herstellung der Rippung erforderlichen Aufwand gegeben. Praktisch günstige Werte liegen bei einer Mindestanzahl von 10 bis 20 Zylinderlinsen bzw. Rippen in der Gesamtlichteintrittsfläche entsprechend einer Linsenbreite T von etwa 4—2 mm. Damit ergeben sich praktische Werte für die Krümmungsradien r von etwa 5 bis 2,5 mm.

Im gezeigten Ausführungsbeispiel sind die Zylinderlinsen 57 konkav ausgebildet. Für die Mischwirkung ist dies jedoch unerheblich, d. h., die Linsen könnten auch konvex, also nach oben gewölbt ausgebildet sein.

Die untere Austrittsfläche 55 des Mischkörpers 5 ist mit Vorzug sphärisch gekrümmt, wobei der Krümmungsradius R so bemessen ist, daß die durch die Austrittsfläche gebildete Linsenfläche die gerippte Lichteintrittsfläche 51 in etwa in die Eintrittspupille des hier nicht dargestellten Abbildungsobjektivs des Kopiergeräts abbildet. Selbstverständlich könnte die Austrittsfläche 55 auch eben sein, wobei dann eine zusätzliche Linse die Aufgaben der sphärischen Fläche übernehmen müßte.

Die Querschnittsfläche des Mischkörpers 5 verjüngt sich entsprechend der pyramidenstumpfförmigen Gestalt seiner beiden Teile 52 und 53 gegen die Mitte zu auf etwa die Hälfte. Die Streuscheibe 54, die von herkömmlicher Art ist, teilt die Gesamtlänge des Mischkörpers 5 etwa im Verhältnis 1 : 2 von der Lichteintrittsseite her. Bei dieser Formgebung des Mischkörpers und Anordnung der Streuscheibe werden die Lichtverluste bei optimaler Mischwirkung minimal. Selbstverständlich könnte der Mischkörper 5 aber auch anders ausgebildet sein. So könnte er z. B. ganz einfach pyramidenstumpfförmig oder sogar prismatisch geformt sein, wobei dann die Streuscheibe am unteren, austrittseitigen Ende angeordnet bzw. die Austrittsfläche als Streuscheibe ausgebildet wäre.

Beim dargestellten Ausführungsbeispiel wird das Wendelbild 15 in die Mittelebene M des Filteraggregats 2 und das Kondensorbild 16 in die Eintrittsfläche 51 des Mischkörpers 5 abgebildet. Selbstverständlich wäre natürlich auch die umgekehrte Anordnung möglich, wobei also das Wendelbild in den Mischkörpereingang und das Kondensorbild in das Filteraggregat abgebildet würde. Außerdem wäre es selbstverständlich auch möglich, die einzelnen Teile der Beleuchtungsvorrichtung relativ gegeneinander um 45° um die optische Achse zu drehen, so daß also z. B. die vier Ecken des Kondensorbilds 16 in Fig. 2 in die Ecken des quadratischen Mischkörpereingangs 51 fallen würden.

In Fig. 6 ist eine mit besonders geringen Lichtverlusten behaftete Variante des Mischkörpers dargestellt. Der Mischkörper 5' ist hier nicht in seiner Mitte eingeschnürt ausgebildet, sondern im wesentlichen pyramidenstumpfförmig. Die Lichtaustrittsfläche 55' und die Lichteintrittsfläche 51' sind jedoch gleich ausgebildet wie beim Ausführungsbeispiel nach den Fig. 1 bis 4.

Anstelle der Streuscheibe ist bei dieser Variante ein spezielles Streuelement 54' vorgesehen, welches unmittelbar vor bzw. auf der Lichteintrittsfläche 51' des Mischkörpers 5' angeordnet ist. Dieses Streuelement 54' besteht aus normal transparentem Glas und weist an einer Seite eine gleich wie die Rippung der Lichteintrittsfläche ausgebildete Rippung 57' und an der anderen Seite eine sphärische Fläche 59' auf. Die Achsen der Rippung bzw. Zylinderlinsen 57' stehen senkrecht zu denen der Zylinderlinsen 57 in der Lichteintrittsfläche. Bezüglich Dimensionierung der Zylinderlinsen 57' gilt Analoges wie bei denen der Lichteintrittsfläche. Die sphärische Fläche 59' ist so dimensioniert, daß sie das Lichtdurchtrittsfenster im Filteraggregat 2 ungefähr in die Negativauflagefläche 6 abbildet.

Anstatt der sphärischen Fläche 59' könnte das Streuelement 54' auch eine ebene untere Begrenzungsfläche aufweisen. Ferner könnten die Zylinderlinsen 57' auch an seiner Unterseite angeordnet und auch konvex ausgebildet sein.

Bei der Variante gemäß Fig. 6 können anstelle der Zylinderlinsen 57 in der Lichteintrittsfläche 51 auch die Zylinderlinsen 57' im Streuelement 54' senkrecht zur projizierten Bewegungsrichtung der Filterpaare verlaufen. Ferner können die beiden Zylinderlinsenreihen 57 und 57' auch in einer einzigen Fläche angeordnet sein, wobei dann natürlich kein gesondertes Streuelement mehr erforderlich wäre. In diesem Fall würden die beiden senkrecht zueinander verlaufenden Zylinderlinsenreihen ein kreuzgewölbeartiges Relief in der Lichteintrittsfläche 51 bilden. Dieses Relief könnte schließlich auch durch ein Raster von sphärischen Linsen ersetzt werden.

**Patentansprüche**

1. Beleuchtungsvorrichtung für ein fotografisches Kopiergerät mit einer Lichtquelle (1), einer Optik (3) und einem Lichtmischkörper (5), dessen Lichteintrittsfläche (51) mit parallelen Rippungen versehen ist, sowie mit einem im Strahlengang zwischen Lichtquelle und Mischkörper angeordneten Filteraggregat (2) zur Steuerung der farblichen Zusammensetzung des Lichts, dadurch gekennzeichnet, daß die Rippungen der Lichteintrittsfläche (51) des Mischkörpers (5) als Zylinderlinsen (57) ausgebildet sind, wobei jeweils zwei benachbarte Linsen zwischen sich eine scharfe Kante (58) bilden, und daß die Zylinderlinsen (57) so dimensioniert sind, daß die von ihnen erzeugten Abbildungen des Lichtdurchtrittsfensters des Filteraggregats (2) im wesentlichen zwischenraum- und überlappungsfrei nebeneinander liegen.

2. Vorrichtung nach Anspruch 1, dadurch gekennzeichnet, daß die Lichteintrittsfläche (51) eine Mindestanzahl von 10 bis 20 Zylinderlinsen aufweist.

3. Vorrichtung nach Anspruch 1 oder 2, dadurch gekennzeichnet, daß die senkrecht zu ihrer Achse gemessene Breite (T) der Zylinderlinsen (57) etwa 4 bis 2 mm beträgt.

4. Vorrichtung nach einem der Ansprüche 1 bis 3, dadurch gekennzeichnet, daß die Krümmungsradien (r) der Zylinderlinsen (57) der Beziehung $r = (n-1) \cdot L \cdot T \cdot / \cdot B$ genügen, wobei n der Brechungsindex des Materials, aus welchem der Mischkörper (5) besteht, L der Abstand zwischen der Lichteintrittsfläche (51) und der Mittelebene (M) des Filteraggregats (2), B die Breite des Lichtdurchtrittsfensters des letzteren und T die Breite der Zylinderlinsen ist.

5. Vorrichtung nach einem der Ansprüche 1 bis 4, dadurch gekennzeichnet, daß die Zylinderlinsen (57) konkav sind.

6. Vorrichtung nach einem der Ansprüche 1 bis 5, dadurch gekennzeichnet, daß die Zylinderlinsen (57) in die Lichteintrittsfläche (51) des Mischkörpers (5) eingepreßt sind.

7. Vorrichtung nach einem der Ansprüche 1 bis 6, dadurch gekennzeichnet, daß das Filteraggregat (2) pro Filterfarbe jeweils ein Paar von Interferenzfiltern (23, 24) aufweist, welche symmetrisch zueinander bezüglich der optischen Achse verstellbar sind, und daß die Achsen der Zylinderlinsen (57) senkrecht zu der auf die Lichteintrittsfläche (51) projizierten Bewegungsrichtung der Filterpaare (23, 24) verlaufen.

8. Vorrichtung nach einem der Ansprüche 1 bis 7, dadurch gekennzeichnet, daß der Lichteintrittsfläche (51) des Mischkörpers (5) ein Streuelement (54') vorgeordnet ist, welches an seiner Eintritts- oder seiner Austrittsseite mit parallelen, Zylinderlinsen (57') bildenden Rippungen versehen ist, die im wesentlichen senkrecht zu den Zylinderlinsen (57) der Lichteintrittsfläche (51) des Mischkörpers (5) orientiert sind.

9. Vorrichtung nach Anspruch 8, dadurch gekennzeichnet, daß das Streuelement (54') an seiner den Rippungen (57') gegenüberliegenden Seite eine sphärische Fläche (59') aufweist, die so dimensioniert ist, daß sie das Lichtdurchtrittsfenster des Filteraggregats (2) im wesentlichen etwa in die Unterlagenfläche (6) für die zu beleuchtende Kopiervorlage abbildet.

10. Vorrichtung nach einem der Ansprüche 1 bis 7, dadurch gekennzeichnet, daß die Lichteintrittsfläche (51) des Mischkörpers mit einer zweiten, zur ersten senkrecht orientierten Reihe von nebeneinander angeordneten Zylinderlinsen (57') versehen ist.

11. Vorrichtung nach einem der Ansprüche 1 bis 7, dadurch gekennzeichnet, daß sich der Mischkörper (5) zwischen Lichteintrittsfläche (51) und Lichtaustrittsfläche (55) verjüngt und an der Stelle des engsten Querschnitts eine Streuscheibe (54) aufweist.

12. Vorrichtung nach Anspruch 11, dadurch gekennzeichnet, daß der engste Querschnitt des Mischkörpers (5) etwa die Hälfte des Querschnitts der Lichteintrittsfläche (51) beträgt.

13. Vorrichtung nach Anspruch 11 oder 12, dadurch gekennzeichnet, daß die Streuscheibe (54) die Länge des Mischkörpers (5) etwa im Verhältnis 1 : 2 teilt, wobei der kürzere Abschnitt lichteintrittsseitig ist.

14. Vorrichtung nach einem der Ansprüche 1 bis 13, dadurch gekennzeichnet, daß die Lichtquelle (1) wenigstens ein aus einer Niedervoltlampe (11), einem Reflektor (12) und einem Kondensor (13, 14) bestehendes System aufweist und daß die Wendel der Lampe (11) in die Mittelebene (M) des Filteraggregats (2) und der Kondensor (13, 14) auf die Lichteintrittsfläche (51) des Mischkörpers (5) abgebildet wird.

15. Vorrichtung nach Anspruch 14, dadurch gekennzeichnet, daß die Lichtquelle (1) zwei bis sechs, vorzugsweise vier Systeme aufweist, welche symmetrisch zur optischen Achse angeordnet sind.

16. Vorrichtung nach Anspruch 7, dadurch gekennzeichnet, daß die einander zugewandten Begrenzungskanten (25, 26) der beiden Filter (23, 24) der Filterpaare im Filteraggregat (2) konkav ausgebildet sind.

## Claims

1. Illuminating device for a photographic copying apparatus with a light source (1), an optical system (3) and a lightmixing element (5) having a light entry face (51) provided with parallel ribbings, and with a filter unit (2) arranged in the light path between the light source and the miseing element, to regulate the colour composition of the light, characterized in that the ribbings of the light entry face (51) of the mixing element (5) are constructed as cylindrical lenses (57), whereby in each case two adjacent lenses form between them a sharp edge (58), and that the cylindrical lenses (57) are dimensioned such that the images generated by them of the light-transmitting window of the filter unit (2) are located adjacent to one another substantially free from interspaces and free form overlapping.

2. Device according to Claim 1, characterized in that the light entry surface (51) has a minimum number of 10 to 20 cylindrical lenses.

3. Device according to Claim 1 or 2, characterized in that the width (T) of the cylindrical lenses (57) measured perpendicular to their axes is from 4 to 2 mm.

4. Device according to Claims 1 to 3, characterized in that the radii of curvature (r) of the cylindrical lenses (57) satisfy the equation $r = (n-1) \cdot L \cdot T \cdot / \cdot B$, where n is the refractive index of the material of which the mixing element (5) consists, L is the distance between the light entry face (51) and the central plane (M) of the filter unit (2), B is the width of the light-transmitting window of the latter and T is the width of the cylindrical lenses.

5. Device according to one of Claims 1 to 4, characterized in that the cylindrical lenses (57) are concave.

6. Device according to one of Claims 1 to 5, characterized in that the cylindrical lenses (57) are pressed into the light entry face (51) of the mixing element (5).

7. Device according to one of Claims 1 to 6, characterized in that the filter unit (2) has in each case a pair of interference filters (23, 24) for each filter colour, which filters are symmetrically adjustable relative to the optical axis, and that the axes of the cylindrical lenses (57) run perpendicular to the direction of movement of the filter pairs (23, 24) projected onto the light entry face (51).

8. Device according to one of Claims 1 to 7, characterized in that a diffusing element (54') is arranged ahead of the light entry face (51) of the mixing element (5) and is provided at its entry or exit end with parallel ribbings forming cylindrical lenses (57'), which are oriented substantially perpendicular to the cylindrical lenses (57) of the light entry face (51) of the mixing element (5).

9. Device according to Claim 8, characterized in that the diffusing element (54') has at its side lying opposite to the ribbings (57') a spherical face (59') which is dimensioned such that it forms an image of the light-transmitting window of the filter unit (2) substantially on the support surface (6) for the original which is to be illuminated for copying.

10. Device according to one of Claims 1 to 7, characterized in that the light entry face (51) of the mixing element is provided with a second row of cylindrical lenses (57') arranged adjacent to each other and oriented perpendicular to the first.

11. Device according to one of Claims 1 to 7, characterized in that the mixing element (5) narrows between the light entry face (51) and light exit face (55) and has a diffuser disc (54) at the narrowest point of the cross-section.

12. Device according to Claim 11, characterized in that the narrowest cross-section of the mixing element (5) is about half the cross-section of the light entry face (51).

13. Device according to Claim 11 or 12, characterized in that the diffuser disc (54) divides the length of the mixing element (5) in a ratio of about 1 : 2, with the shorter section being on the side of light entry.

14. Device according to one of Claims 1 to 13, characterized in that the light source (1) has at least one system consisting of a low voltage lamp (11), a reflector (12) and condenser (13, 14), and that an image of the coil of the lamp (11) is formed in the central plane (M) of the filter unit (2) and an image of the condenser (13, 14) is formed on the light entry face (51) of the mixing element (5).

15. Device according to Claim 14, characterized in that the light source (1) has from two to six, preferably four systems which are arranged symmetrically to the optical axis.

16. Device according to Claim 7, characterized in that the limiting edges (25, 26), facing each other, of the two filters (23, 24) of the pairs of filters in the filter unit (2) are of concave construction.

## Revendications

1. Dispositif d'éclairage pour une machine à photocopier, comprenant une source de lumiére (1), un objectif (3) et un élément (5) mélangeur ou synthétiseur de lumière, dont la surface (51) de pénétration de la lumiére est pourvue de striures paralléles, ainsi qu'un groupe de filtration (2) intercalé sur le trajet des rayons lumineux entre la source de lumière et l'élément synthétiseur et destinè à disperser les couleurs composant la lumière, caractèrisè par le fait que les striures de la surface (51) de pènètration de la lumière dans l'élément synthétiseur (5) sont réalisées sous la forme de lentilles cylindriques (57), deux lentilles voisines respectives formant entre elles une arête vive (58); et par le fait que les lentilles cylindriques (57) sont dimensionnées de telle maniére que les reproductions de la fenêtre de passage de la lumiére de l'ensemble de filtration (2), réalisées par ces lentilles, soient pour l'essentiel juxtaposées sans aucun espace intermédiaire ni aucun chevauchement.

2. Dispositif selon la revendication 1, caractérisé par le fait que la surface (51) de pénétration de la lumière présente un nombre minimal de 10 à 20 lentilles cylindriques.

3. Dispositif selon la revendication 1 ou 2, caractérisé par le fait que la largeur (T) des lentilles cylindriques (57), mesurée perpendiculairement à leur axe, est d'environ 4 à 2 mm.

4. Dispositif selon l'une des revendications 1 à 3, caractérisé par le fait que les rayons de courbure (r) des lentilles cylindriques (57) satisfont à l'équation $r = (n-1) \cdot L \cdot T \cdot / \cdot B$, dans laquelle n désigne l'indice de réfraction de la matière dont est constitué l'élément synthétiseur (5), L la distance entre la surface (51) de pénétration de la lumière et le plan médian (M) du groupe de filtration (2), B la largeur de la fenêtre de passage de la lumière à travers ce dernier et T la largeur des lentilles cylindriques.

5. Dispositif selon l'une des revendications 1 à 4, caractérisé par le fait que les lentilles cylindriques (57) sont concaves.

6. Dispositif selon l'une des revendications 1 à 5, caractérisé par le fait que les lentilles cylindriques (57) sont insérées par pression dans la surface (51) de pénétration de la lumière dans l'élément synthétiseur (5).

7. Dispositif selon l'une des revendications 1 à 6, caractérisé par le fait que l'ensemble de filtration (2) présente pour chaque couleur filtrée une paire respective de filtres interférentiels (23, 24) qui peuvent être réglés mutuellement de manière symétrique par rapport à l'axe optique; et par le fait que les axes des lentilles cylindriques (57) s'étendent perpendiculairement à la direction du mouvement, projetée sur la surface (51) de pénétration de la lumière, des paires de filtres (23, 24).

8. Dispositif selon l'une des revendications 1 à 7, caractérisé par le fait qu'un organe de dispersion (54'), situé en amont de la surface (51) de pénétration de la lumière dans l'élément synthétiseur (5), est muni sur son côté entrée ou sur son côté sortie de striures parallèles qui, formant des lentilles cylindriques (57'), sont orientées sensiblement perpendiculairement aux lentilles cylindriques (57) de la surface (51) de pénétration de la lumière dans l'élément synthétiseur (5).

9. Dispositif selon la revendication 8, caractérisé par le fait que, sur son côté opposé aux striures (57'), l'organe de dispersion (54') présente une face sphérique (59') dimensionnée de telle sorte que, pour l'essentiel, elle reproduise la fenêtre de passage de la lumière de l'ensemble de filtration (2) sensiblement dans la surface de support (6) de l'exemplaire à copier devant être éclairé.

10. Dispositif selon l'une des revendications 1 à 7, caractérisé par le fait que la surface (51) de pénétration de la lumière dans l'élément synthétiseur est munie d'une seconde rangée, orientée perpendiculairement à la première, de lentilles cylindriques juxtaposées (57').

11. Dispositif selon l'une des revendications 1 à 7, caractérisé par le fait que l'élément synthétiseur (5) décroît de section entre la surface (51) de pénétration de la lumière et la surface (55) de sortie de cette lumière, et présente un disque de dispersion (54) à l'endroit où sa section est la plus étroite.

12. Dispositif selon la revendication 11, caractérisé par le fait que la section la plus étroite de l'élément synthétiseur (5) correspond sensiblement à la moitié de la section de la surface (51) de pénétration de la lumière.

13. Dispositif selon la revendication 11 ou 12, caractérisé par le fait que le disque de dispersion (54) subdivise sensiblement dans le rapport de 1 : 2 la longueur de l'élément synthétiseur (5), le tronçon le plus court étant situé du côté de la pénétration de la lumière.

14. Dispositif selon l'une des revendications 1 à 13, caractérisé par le fait que la source de lumière (1) comporte au moins un système comprenant une lampe (11) de basse tension, un réflecteur (12) et un condenseur (13, 14); et par le fait que le filament de la lampe (11) est reproduit, sur la surface (51) de pénétration de la lumière dans l'élément synthétiseur (5), dans le plan médian (M) de l'ensemble de filtration (2) et du condenseur (13, 14).

15. Dispositif selon la revendication 14, caractérisé par le fait que la source de lumière (1) présente de deux à six, de préférence quatre systèmes, qui sont agencés symétriquement par rapport à l'axe optique.

16. Dispositif selon la revendication 7, caractérisé par le fait que les bords (25, 26), tournés l'un vers l'autre, des deux filtres (23, 24) des paires de filtres dans l'ensemble de filtration (2) sont de forme concave.

**Fig. 1**

0 046 732

_Fig. 2_

_Fig. 3_

**Fig. 4**

**Fig. 5**

Fig. 6